# FASCICULE DE BREVET EUROPEEN

(11) **EP 0 406 068 B1**
(45) Date de publication et mention de la délivrance du brevet: **19.01.1994**
(21) Numéro de dépôt: 90401749.8
(22) Date de dépôt: 21.06.1990
(51) Int. Cl.: B29C 47/04, B29C 47/14

(54) **Dispositif pour la fabrication de couches de matières plastiques transparentes présentant une bande filtrante colorée dans la masse**
Vorrichtung zur Herstellung von durchsichtigen Kunststoffschichten, welche ein eingefärbtes filtrierendes Band in der Masse aufweisen
Apparatus for manufacturing transparent plastic layers with a colored filtering band

(30) Priorité: 24.06.1989 DE 3920774
(43) Date de publication de la demande: 02.01.1991
(73) Titulaire: SAINT-GOBAIN VITRAGE INTERNATIONAL, 92400 Courbevoie (FR)
(72) Inventeur: Crumbach, Richard, D-5100 Aachen (DE); Jandeleit, Otto, D-5110 Alsdorf (DE)
(74) Mandataire: Muller, René

(56) Documents cités:
- EP-A- 0 287 861
- DE-A- 3 517 779
- FR-A- 1 458 424
- GB-A- 996 432
- US-A- 4 476 075
- US-A- 4 562 023

## Description

La présente invention concerne un dispositif de coulée destinée à appliquer des couches de matières plastiques aptes à la coulée sur des substrats plans, comportant une tête de coulée à racle présentant un conduit de distribution s'étendant sur la largeur d'application, qui est pourvue d'un conduit d'alimentation s'ouvrant dans le conduit de distribution et raccordé à une conduite aboutissant à une pompe d'alimentation, d'une fente de coulée s'ouvrant dans le conduit de distribution et d'une règle de raclage.

Une tête de coulée à racle de ce type est décrite dans le document DE-PS-26 14 596. Dans la tête de coulée à racle connue d'après ce document, la fente de coulée s'ouvrant dans le conduit de distribution présente une épaisseur relativement faible et une longueur relativement grande. De ce fait, la masse de coulée rencontre, dans la fente de coulée, une résistance élevée à l'écoulement. Ceci a pour conséquence que la pression statique de la masse de coulée est partout égale à l'intérieur du conduit de distribution, de sorte que la masse de coulée s'échappe à la même vitesse de la fente de coulée sur toute la largeur de celle-ci et que des zones mortes dans le système sont de cette manière évitées. En conséquence de cette construction, une telle tête de coulée à racle convient particulièrement pour la production de couches et de pellicules homogènes à partir de matières plastiques hautement transparentes, par exemple également à partir de mélanges de réaction à plusieurs constituants, dont la réaction débute déjà à l'intérieur de la tête de coulée et pour lesquels, des zones mortes dans le système provoquent la formation de stries dans la couche transparente.

Les têtes de coulée à racle de ce type trouvent un domaine d'application préféré dans la fabrication de couches et de pellicules en polyuréthane hautement transparent, qui sont utilisées comme couches intermédiaires et/ou couches de revêtement antiéclats pour des pare-brise multicouches. A titre de substrat de coulée pour ces couches, on peut utiliser soit le substrat qui doit être pourvu de la couche, soit d'autres substrats plans desquels, après durcissement de la masse de coulée, la couche durcie est enlevée sous la forme d'une pellicule.

Les pare-brise pour véhicules automobiles sont fréquemment pourvus, le long de leur bord supérieur, d'une bande filtrante de couleur atténuant les rayons du soleil. En règle générale, cette bande filtrante de couleur se trouve dans la pellicule de matière thermoplastique unissant les deux feuilles de verre individuelles d'un vitrage feuilleté. Elle peut être élaborée par coloration de la pellicule ou par coextrusion d'une masse de matière plastique de couleur et d'une masse de matière plastique incolore. Entre la bande de couleur et la zone incolore est prévue une zone de transition dans laquelle la transparence varie de manière continue sur une distance de 1 centimètre à plusieurs centimètres, de sorte que les propriétés de filtrage varient en quelque sorte en forme de coin dans cette zone de transition. Une telle zone de transition continue est exigée par les prescriptions d'homologation.

Alors que des pellicules en matières thermoplastiques présentant une bande filtrante et une zone de transition continue entre la zone hautement transparente et la bande filtrante peuvent être fabriquées à l'aide d'extrudeuses connues, la fabrication de couches ou de pellicules à bande filtrante à partir de mélanges de réaction à l'aide d'une tête de coulée n'est jusqu à présent pas possible.

Le document EP-A-0 287 861 décrit un dispositif de coulée utilisant deux conduits pour l'alimentation d'une fente de coulée de structure géométrique complexe comportant une section de mélange.

Dans ce dispositif il n'est pas prévu de racle empêchant un écoulement direct de la matière coulée sur le support.

Le dispositif décrit concerne pas un dispositif de coulée à racle et son fonctionnement avec une réserve de matière en amont de la fente de coulée du fait de la racle.

La présente invention a pour but de développer un dispositif de coulée comportant une tête de coulée à racle du type précité pour la fabrication de pellicules ou de couches de matières plastiques à partir de masses de coulée d'une manière telle que la fabrication de pellicules ou de couches présentant une bande filtrante et une zone de transition continue entre la bande filtrante et le champ de vision hautement transparent de la pellicule ou de la couche devienne possible.

Le dispositif de coulée conforme à l'invention est caractérisé en ce que le conduit de distribution de la tête de coulée à racle est pourvu d'un autre conduit d'alimentation pour l'admission d'une masse de coulée différente de la masse de coulée admise par le premier conduit d'alimentation, que dans la zone du conduit correspondant à la zone de transition souhaitée entre les deux masses de coulée est prévue, entre les deux conduits d'alimentation, une section de mélange dans laquelle s'opère un mélange des deux masses de coulée, et que les pompes servant à l'alimentation des deux masses de coulée sont conçues et peuvent être commandées d'une manière telle qu'à tout moment, elles produisent la même pression des deux masses de coulée à l'intérieur de la section de mélange dans le conduit de distribution de la tête de coulée.

Il s'est avéré que des couches ou des pellicules présentant une bande filtrante et une zone de transition irréprochable inchangée peuvent être réalisées à l'aide d'une tête de coulée à racle et des particularités caractéristiques de l'invention. Une importance particulière doit alors être attribuée à la section de mélange dans le conduit de distribution qui peut, en principe, être d'une configuration différente, pour autant que soit satisfaite la condition que la section transversale d'écoulement pour chacune des deux masses de coulée aille en diminuant en direction de l'autre masse de coulée, chaque fois à partir d'une aire maximale jusqu'à une aire minimale. La commande précise de la pression des pompes d'alimentation pour les deux masses de coulée différentes est également très importante, car les plus petites différences de pression provoquent déjà des irrégularités dans la largeur et l'allure de la zone de transition. Dans le cas de pompes pulsantes, par exemple, il faut garantir l'obtention de mouvements en phase des pistons des pompes.

Pour réaliser une zone de transition continue irréprochable entre la bande filtrante et la zone hautement transparente, il est important, en outre, que les deux masses de coulée soient bien miscibles entre elles. Le cas échéant, il faut également assurer, par des additions adéquates à l'une et/ou l'autre des deux masses de coulée, que les paramètres influençant les propriétés de mélange, comme par exemple la tension superficielle des masses de coulée, soient mutuellement adaptés pour assurer, même dans une section de mélange relativement courte, l'obtention d'un mélange homogène.

Suivant un développement avantageux de l'invention, le dispositif formant la section de mélange à l'intérieur du conduit de distribution peut être monté à coulissement dans le sens axial du conduit de distribution, et un mécanisme d'entraînement peut être prévu pour provoquer un mouvement de va-et-vient périodique de ce dispositif et ainsi de la section de mélange. De cette manière, il est possible de conférer à l'interface entre les deux masses de coulée, par exemple, la configuration d'arcs de cercle qui se suivent.

Il est ainsi possible de fabriquer des couches ou des pellicules présentant des bandes filtrantes, dont la ligne de délimitation s'étend en arc de cercle parallèlement au bord supérieur du pare-brise, ce qui, en règle générale, est souhaité pour des raisons d'esthétique.

D'autres particularités de l'invention ressortiront des revendications dépendantes et de la description suivante de divers exemples de réalisation du dispositif de coulée conforme à l'invention.

Dans les dessins annexés :
La fig. 1 est une vue d'ensemble schématique d'un dispositif de coulée conforme à l'invention pendant l'enduction d'un substrat de coulée ;
La fig. 2 est une vue en coupe, à plus grande échelle, suivant la ligne II-II de la fig. 1 ;
Les fig. 3 à 5 montrent diverses vues en coupe d'une première forme d'exécution d'une tête de coulée ;
La fig. 6 est une vue en coupe longitudinale verticale d'une autre forme d'exécution d'une tête de coulée, et
La fig. 7 est également une vue en coupe longitudinale verticale d'une forme d'exécution d'une tête de coulée, dans laquelle la position de la section de mélange est déplaçable par coulissement dans le sens axial.

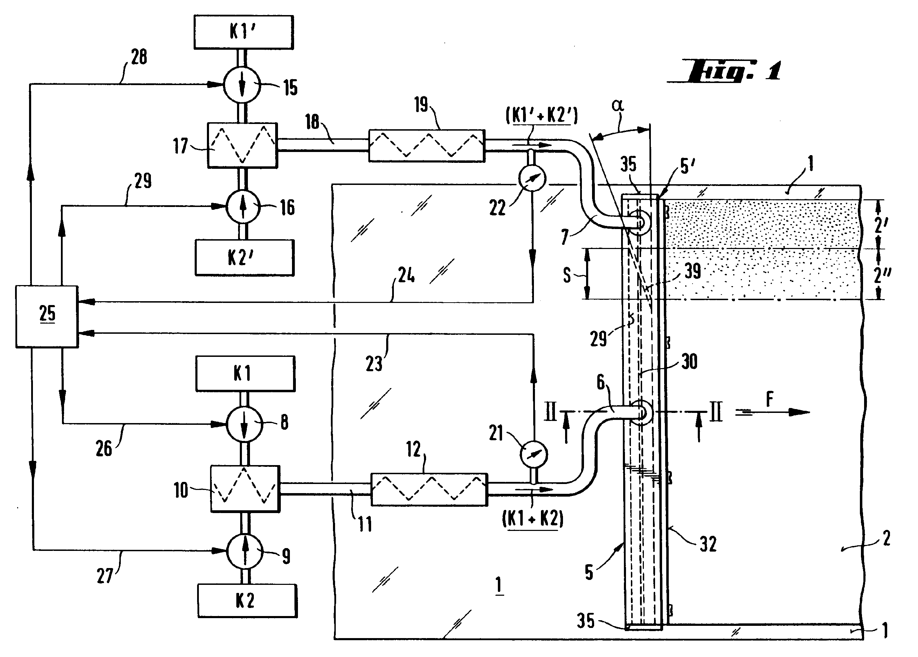

Une couche 2 d'un mélange de réaction formant la masse de coulée est coulée sur un substrat de coulée plan 1 à l'aide du dispositif de coulée représenté sur la fig. 1. La couche 2 est constituée, dans sa zone marginale 2', d'une masse de coulée colorée dans la masse présentant une transparence et une coloration restant constantes de manière homogène.

La transparence augmente de manière continue dans la zone de transition 2˝, de sorte qu'un effet de filtrage et d'absorption décroissant est obtenu dans cette zone.

Dans le cas représenté, une pellicule est obtenue par enlèvement de la couche 2 du substrat de coulée 1 après son durcissement. La pellicule ou la couche 2 est faite d'un polyuréthane qui est obtenu par réaction d'un polyol (constituant K1) et d'un isocyanate (constituant K2).

L'application de la masse de coulée sur le substrat de coulée 1 s'effectue à l'aide de la tête de coulée à racle 5. La tête de coulée 5 est pourvue d'une conduite de raccordement médiane 6 par laquelle la masse de coulée hautement transparente (K1 + K2) est introduite dans la tête de coulée 5. Dans la section d'extrémité 5', la tête de coulée est pourvue d'une autre conduite de raccordement 7. La conduite de raccordement 7 assure l'alimentation de la masse de coulée colorée dans la masse (K1' + K2') qui est nécessaire pour la formation de la zone marginale colorée 2'.

La masse de coulée introduite dans la conduite de raccordement 6 et celle introduite dans la conduite de raccordement 7 sont chaque fois préparées séparément. Pour la préparation de la masse de coulée hautement transparente introduite dans la tête de coulée 5 par la conduite 6, le constituant K1 est pompé par la pompe 8 et le constituant K2 est pompé par la pompe 9 dans la tête de mélange 10. A partir de la tête de mélange 10, le mélange de réaction parvient, par la conduite 11, dans un autre mélangeur 12 auquel la conduite 6 se raccorde.

D'une manière analogue, le constituant K1', formant la masse de coulée pour la zone marginale colorée 2', est pompé par une pompe 15 et le constituant K2' est pompé par une pompe 16 dans une tête de mélange 17.

A partir de la tête de mélange 17, le mélange de réaction formant la masse de coulée parvient par la conduite 18 dans le mélangeur 19 auquel est raccordée la conduite 7.

Un manomètre 21 est raccordé à la conduite 6 et un manomètre 22 est raccordé à la conduite 7. Par l'intermédiaire des lignes de signalisation 23 et 24, les valeurs réelles des pressions régnant dans les deux conduites 6 et 7 sont appliquées à l'unité de régulation 25. Dans cette unité de régulation 25, les pressions effectives sont comparées de manière continue. Par l'intermédiaire des lignes de commande 26, 27, 28 et 29, les pompes 8, 9, 15 et 16 sont soumises à une régulation fine, de telle sorte que les pressions régnant dans les conduites 6 et 7 soient toujours exactement égales. Lorsque les pompes 8, 9, 15 et 16 sont des pompes pulsantes, par exemple des pompes à pistons, l'unité de régulation 25 assure également que les fluctuations de pression périodiques des pompes individuelles, qui sont dues à la pulsation des pompes, soient en phase, afin que les fluctuations de pression périodiques correspondantes dans les conduites 6 et 7 ne présentent pas non plus de déphasage.

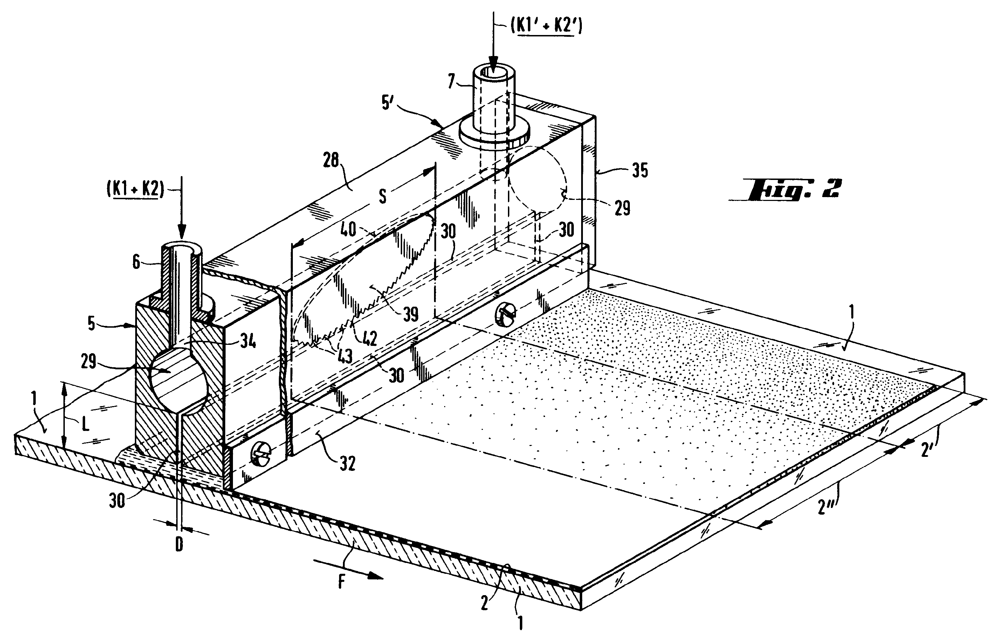

La structure fondamentale de la tête de coulée 5 est indiquée sur la fig. 2. La tête de coulée 5 est essentiellement constituée d'un corps métallique 28 qui présente un alésage s'étendant dans le sens longitudinal du corps métallique 28 et servant de conduit de distribution 29, dans lequel s'ouvre la fente de coulée 30. La fente de coulée 30 a une longueur L de 10 à 100 mm et une épaisseur D de 0,1 à 0,5 mm. La règle de raclage 32 est fixée au corps métallique 28. Le substrat de coulée 1 défile en dessous de la tête de coulée 5 à une vitesse constante, dans le sens de la flèche F.

Le conduit d'alimentation médian 34 s'ouvre dans le conduit de distribution 29, au milieu du corps métallique 28. La conduite d'alimentation 6 est raccordée par brides au corps métallique 28 et alimente le conduit de distribution 29 au moyen de la masse de coulée par le conduit d'alimentation 34. La conduite d'alimentation 7, qui alimente le conduit de distribution 29 à une extrémité de la tête de coulée au moyen de la masse de coulée colorée, est également raccordée par brides au corps métallique 28. Des plaques obturatrices 35 sont vissées au corps métallique 28 sur les faces d'about de celui-ci et obturent le conduit de distribution 29 et la fente 30 au niveau de ses côtés.

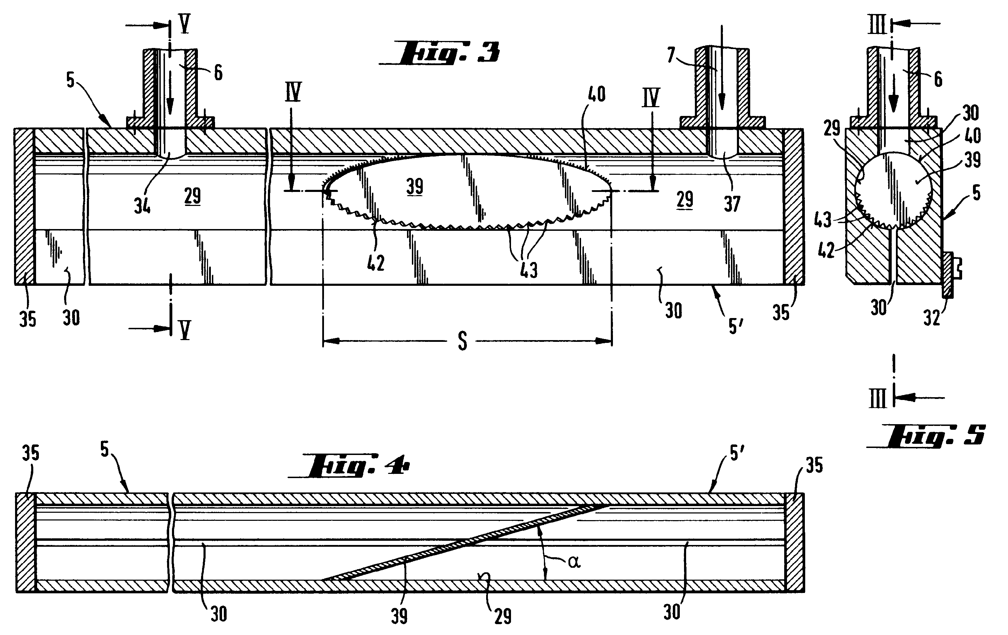

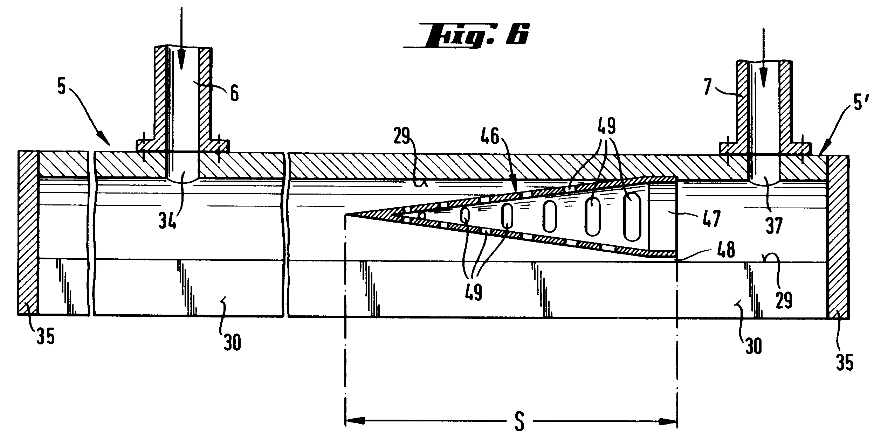

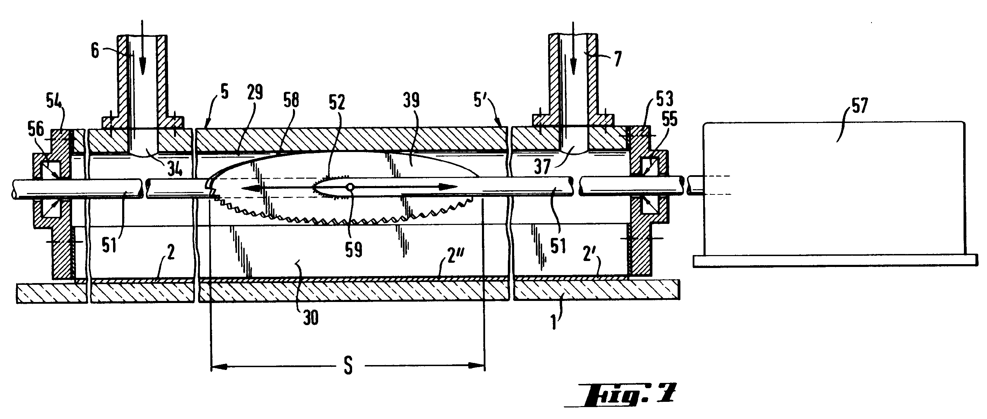

Comme les fig. 3 à 5 le montrent en détail, dans le conduit de distribution 29, entre le conduit d'alimentation 37, auquel est raccordée la conduite 7 pour la masse de coulée colorée, et le conduit d'alimentation médian 34, auquel est raccordée la conduite 6, se trouve une section de mélange 8 dans laquelle une transition continue entre les deux masses de coulée différentes est formée, c'est-à-dire dans laquelle les deux masses de coulée se mélangent d'une façon telle que la transition continue souhaitée soit formée.

A cet effet, une cloison de séparation 39, ayant la forme d'un disque ellipsoïdal, est installée obliquement à l'intérieur du conduit de distribution 29 d'une manière telle que la section d'écoulement aille chaque fois en diminuant de manière continue d'un côté de cette cloison de séparation 39, tandis que la section d'écoulement augmente chaque fois progressivement dans la même mesure de l'autre côté de la cloison de séparation 39. La cloison de séparation 39 disposée dans le conduit de distribution 29 de section transversale ronde est orientée verticalement et ce sous un angle a par rapport à la direction axiale du conduit de distribution 29.

L'angle a est obtenu directement à partir de la longueur souhaitée de la section de mélange S, qui définit la zone de transition entre les deux masses de coulée. Le long de la partie supérieure 40 de sa surface périphérique, c'est-à-dire sur la section par laquelle elle s'applique contre la moitié supérieure du conduit de distribution 29, la cloison de séparation 39 est adaptée de manière étanche à la paroi du conduit de distribution, par exemple par soudage à cette paroi. La partie périphérique inférieure 42 de la cloison de séparation 39 est dépourvue de toute liaison à la paroi du conduit de distribution 29 et laisse subsister, entre la paroi du conduit de distribution 29 et la cloison de séparation 39, une fente livrant passage aux masses de coulée qui se mélangent chacune avec la masse de coulée se trouvant de l'autre côté de la cloison de séparation 39.

La dimension optimale de la fente 43 est fonction de la viscosité des masses de coulée et peut être déterminée expérimentalement. Dans le cas représenté, la surface périphérique inférieure 43 de la cloison de séparation 39 présente une configuration dentée, ce qui s'est avéré particulièrement avantageux.

Une autre forme d'exécution possible pour la section de mélange dans le conduit de distribution 29 est illustrée sur la fig. 6. Dans ce cas, est installé à l'intérieur du conduit de distribution 29 un corps creux conique 46 dont la base est orientée vers le côté qui est alimenté par le conduit d'alimentation 37 au moyen de la masse de coulée colorée. Au niveau de sa base 47, le corps creux conique 46 est adapté de manière étanche à la paroi du conduit de distribution 29, mais la partie de base 47 est aplatie dans la zone 41 proche de la fente 30, de sorte que la transition du conduit de distribution 29 à la fente 30 n'est pas interrompue. L'ouverture 48 formée de cette façon permet donc le passage de la masse de coulée.

Dans la paroi du corps creux conique 46 est prévue une rangée d'ouvertures de passage 49, dont la section va en diminuant en direction de la pointe conique du corps creux 46.

La masse de coulée colorée sort par les ouvertures 49, s'infiltre dans la masse de coulée incolore présente à l'extérieur du corps creux conique et se mélange à celle-ci, de sorte que l'on obtient de cette façon la transition continue souhaitée entre les deux masses de coulée.

Dans cette forme d'exécution représentée sur la fig. 6, les résistances à l'écoulement pour les deux masses de coulée différentes sont, dans certaines circonstances, différentes dans la zone de la section de mélange 8 en fonction des dimensions des ouvertures de passage particulières choisies. Etant donné qu'en vue d'un mélange uniforme, la pression hydrostatique des deux masses de coulée est présumée être la même dans la section de mélange, il faut, le cas échéant, augmenter la pression en conséquence dans une des deux conduites d'alimentation 6 ou 7, afin de compenser la perte de charge due aux résistances à l'écoulement inégales.

La Fig. 7 illustre une variante de la tête de coulée décrite en premier lieu, qui se distingue par le fait que la cloison de séparation 39 est installée à l'intérieur du conduit de distribution 29 de manière à pouvoir coulisser dans le sens axial de ce conduit. A cet effet, la cloison de séparation elliptique 39 est fixée sur une tige de positionnement 51, par exemple par une jonction soudée 52. La tige de positionnement 51 est montée à coulissement dans les plaques d'obturation latérales 53 et 54, les joints 55 et 56 assurant l'étanchéité de l'obturation du conduit de distribution 29. Le dispositif d'entraînement 57 communique à la tige de positionnement 51, et ainsi à la cloison de séparation 39, le mouvement de coulissement axial souhaité dans le sens de la double flèche 59, tandis que la surface de glissement 58 de la cloison de séparation 39 coopère avec la paroi du conduit de distribution dans la moitié supérieure du conduit de distribution 29.

Lorsque le dispositif d'entrainement 57 assure, par exemple, un mouvement de va-et-vient périodique de la cloison de séparation 39, on peut obtenir une allure ondulée de la ligne de séparation entre la partie colorée et la partie hautement transparente de la couche coulée. De même, le dispositif d'entraînement 57 peut assurer un mouvement périodique de la cloison de séparation 39 qui donne une succession de zones de transition et de lignes de séparation en arc de cercle entre la bande colorée et la partie hautement transparente de la couche coulée. On peut ainsi réaliser des bandes filtrantes colorées à zone de transition courbe, qui sont fréquemment utilisées dans des pare-brise pour véhicules automobiles.

Le dispositif selon l'invention est avantageusement utilisé pour la fabrication de couches de polyuréthane de haute qualité optique utilisé dans les vitrages feuilletés et en particulier dans les vitrages feuilletés dits asymétriques formés d'un support monolithique ou feuilleté et d'une feuille de matière plastique comprenant au moins une couche en polyuréthane comme décrit par exemple dans les publications de brevets européens EP 0 132 198, EP 0 131 523, EP 0 133 090, EP 0 190 517.

Ces couches de polyuréthane obtenues par coulée réactive d'un mélange réactionnel de deux composants, à savoir un composant isocyanate et un composant polyol peuvent être des couches ayant des propriétés d'absorbeur d'énergie et/ou des propriétés de résistance à la rayure et à l'abrasion.

Les mélanges réactionnels constituants la partie colorée des couches selon l'invention sont formés généralement à partir des mêmes composants que la partie non colorée, la seule différence étant l'ajout dans leur composition d'agents colorants adaptés.

## Revendications

1. Dispositif pour la fabrication de couches de matières plastiques par coulée de masses liquides sur des substrats plans, comportant une tête de coulée à racle présentant un conduit de distribution s'étendant sur la largeur d'application, qui est pourvue d'un conduit d'alimentation s'ouvrant dans le conduit de distribution et raccordé à une conduite aboutissant à une pompe d'alimentation, une fente de coulée s'ouvrant dans le conduit de distribution et une règle de raclage, caractérisé en ce que le conduit de distribution (29) de la tête de coulée à racle (5) est pourvu d'un autre conduit d'alimentation (7 ; 37) pour l'admission d'une masse de coulée différente de la masse de coulée admise par le premier conduit d'alimentation, que dans la zone du conduit de distribution (29) correspondant à la zone de transition souhaitée entre les deux masses de coulée est prévue, entre les deux conduits d'alimentation (6, 7 ; 34, 37), une section de mélange (S) dans laquelle s'opère un mélange des deux masses de coulée, et que les pompes (8, 9, 15, 16) servant à l'alimentation des deux masses de coulée sont conçues et peuvent être commandées de manière telle, qu'à tout moment, elles produisent la même pression des deux masses de coulée à l'intérieur de la section de mélange (S) dans le conduit de distribution (29).

2. Dispositif suivant la revendication 1, caractérisé en ce qu'à l'intérieur de la section de mélange (S) est installée une cloison de séparation (39), sous un angle (a) par rapport à l'axe du conduit de distribution (29) qui laisse subsister, entre la surface périphérique de la cloison de séparation (39) et la paroi de distribution (29), une fente de passage (43) pour les deux masses de coulée.

3. Dispositif suivant la revendication 2, caractérisé en ce que la cloison de séparation (39) est disposée verticalement dans le conduit de distribution (29).

4. Dispositif suivant la revendication 2 ou 3, caractérisé en ce que la partie de la périphérie de la cloison de séparation (39) formant la fente de passage (43) est de configuration dentée.

5. Dispositif suivant une des revendications 2 à 4, caractérisé en ce que la cloison de séparation (39) est appliquée de manière étanche contre la paroi du conduit de distribution (29) le long de la partie supérieure de sa surface périphérique et la fente de passage (43) est formée le long de la partie inférieure de la surface périphérique (42) de la cloison de séparation.

6. Dispositif suivant une des revendications 2 à 5, caractérisé en ce que la cloison de séparation (39) est montée fixe dans le conduit de distribution (29).

7. Dispositif suivant une des revendications 2 à 5, caractérisé en ce que la cloison de séparation (39) est montée coulissante dans le conduit de distribution (29), dans le sens axial de celui-ci.

8. Dispositif suivant la revendication 7, caractérisé en ce que la cloison de séparation (39) est montée à l'aide d'une tige de positionnement (51) qui peut être animée de mouvements de coulissement périodiques par un dispositif d'entraînement (57).

9. Dispositif suivant la revendication 1, caractérisé en ce qu'à l'intérieur de la section de mélange (S) dans le conduit de distribution (29) est installé un corps creux conique (46), dont la partie de base (47) s'applique contre la paroi du conduit de distribution (29) et dans la paroi duquel sont prévues des ouvertures de passage (49), dont la section va en diminuant en direction de la pointe du corps creux conique.

10. Dispositif suivant la revendication 9, caractérisé en ce que la partie de base (47) du corps creux conique (46) est dirigée vers le conduit d'alimentation (37) dans la zone d'extrémité de la tête de coulée à racle.

11. Application du dispositif, selon une des revendications 1 à 10, à la fabrication d'une couche de polyuréthane présentant une bande colorée et ayant des propriétés d'absorbeur d'énergie.

12. Application du dispositif, selon une des revendications 1 à 11, à la fabrication d'une couche de polyuréthane présentant une bande colorée et ayant des propriétés de résistance à la rayure et à l'abrasion.

## Patentansprüche

1. Vorrichtung zur Herstellung von Kunststoffschichten durch Gießen flüssiger Massen auf plane Unterlagen, mit einem einen sich über die Auftragsbreite erstreckenden Verteilerkanal aufweisenden Abstreichgießkopf, der mit einer in den Verteilerkanal mündenden und an einer zu einer Förderpumpe führenden Rohrleitung angeschlossenen Zuführungsleitung sowie mit einem sich an den Verteilerkanal anschließenden Gießspalt und mit einem Abstreichlineal versehen ist, **dadurch gekennzeichnet**, daß der Verteilerkanal (29) des Abstreichgießkopfes (5) mit einer weiteren Zuführungsleitung (7;37) für die Zuführung einer Gießmasse, die von der über die erste Zuführungsleitung zugeführten Gießmasse verschieden ist, versehen ist, daß in dem der gewünschten Übergangszone zwischen den beiden Gießmassen entprechenden Bereich des Verteilerkanals (29) zwischen den Zuführungsleitungen (6,7;34,37) eine Mischstrecke (S) vorgesehen ist, in der eine Mischung der beiden Gießmassen erfolgt, und daß die für die Zuführung der beiden Gießmassen dienenden Pumpen (8,9,15,16) so ausgelegt und steuerbar sind, daß sie in jedem Zeitpunkt den gleichen Druck der Gießmassen innerhalb der Mischstrecke (S) im Verteilerkanal (29) erzeugen.

2. Vorrichtung nach Anspruch 1, dadurch gekennzeichnet, daß innerhalb der Mischstrecke (S) eine Trennwand (39) unter einem Winkel (a) zur Achse des Verteilerkanals (29) angeordnet ist, die zwischen der Umfangsfläche der Trennwand (39) und der Verteilerwand (29) einen Durchtrittsspalt (43) für die beiden Gießmassen bestehen läßt.

3. Vorrichtung nach Anspruch 2, dadurch gekennzeichnet, daß die Trennwand (39) in dem Verteilerkanal (29) senkrecht angeordnet ist.

4. Vorrichtung nach Anspruch 2 oder 3, dadurch gekennzeichnet, daß der den Durchtrittsspalt (43) bildende Teil des Umfangs der Trennwand (39) gezahnt ausgebildet ist.

5. Vorrichtung nach einem der Ansprüche 2 bis 4, dadurch gekennzeichnet, daß die Trennwand (39) entlang des oberen Teils ihrer Umfangsfläche dicht an die Wand des Verteilerkanals (29) anschließt und der Durchtrittsspalt (43) entlang des unteren Teils der Umfangsfläche (42) der Trennwand gebildet ist.

6. Vorrichtung nach einem der Ansprüche 2 bis 5, dadurch gekennzeichnet, daß die Trennwand (39) in dem Verteilerkanal (29) fest angeordnet ist.

7. Vorrichtung nach einem der Ansprüche 2 bis 5, dadurch gekennzeichnet, daß die Trennwand (39) in dem Verteilerkanal (29) in dessen Achsrichtung verschiebbar gelagert ist.

8. Vorrichtung nach Anspruch 7, dadurch gekennzeichnet, daß die Trennwand (39) mit Hilfe einer Positionierstange (51) gelagert ist, die durch eine Antriebsvorrichtung (57) in periodische Schiebbewegungen versetzbar ist.

9. Vorrichtung nach Anspruch 1, dadurch gekennzeichnet, daß innerhalb der Mischstrecke (S) in dem Verteilerkanal (29) ein konischer Hohlkörper (46) angeordnet ist, dessen Basisteil (47) sich an der Wand des Verteilerkastens (29) anschließt, und in dessen Wand Durchtrittsöffnungen (49) vorgesehen sind, deren Querschnitte zur Spitze des konischen Hohlkörpers hin abnehmen.

10. Vorrichtung nach Anspruch 9, dadurch gekennzeichnet, daß der Basisteil (47) des konischen Hohlkörpers (46) zu dem Zuführungskanal (37) im Endbereich des Abstreichgießkopfes hin gerichtet ist.

11. Anwendung einer Vorrichtung nach einem der Ansprüche 1 bis 10 zur Herstellung einer Polyurethanschicht mit einem gefärbten Streifen und mit energieabsorbierenden Eigenschaften.

12. Anwendung der Vorrichtung nach einem der Ansprüche 1 bis 11 zur Herstellung einer kratz- und abriebfesten Polyurethanschicht mit einem Farbstreifen.

## Claims

1. Device for the production of sheets or films of plastics materials by casting liquid masses onto plane substrates, the device comprising a scraper casting head having a distribution duct extending across the width of application, which is provided with a feed duct leading into the distribution duct and connected to a pipe leading from a feed pump, a casting slot opening into the distribution duct and a scraper blade, characterized in that the distribution duct (29) of the scraper casting head (5) is provided with another feed duct (7; 37) for the entry of a casting mass different from the casting mass entering through the first feed duct, that in the region of the distribution duct (29) corresponding to the desired transition zone between the two casting masses there is provided, between the two feed ducts (6, 7; 34, 37), a mixing section (S), in which a mixing of the two casting masses takes place, and that the pumps (8, 9, 15, 16) serving for supplying the two casting masses are designed and can be controlled in such a way that, at any instant, they produce the same pressure in the two casting masses inside the mixing section (S) in the distribution duct (29).

2. Device according to Claim 1, characterized in that, inside the mixing section (S), there is installed a separating partition (39) at an angle (a) to the axis of the distribution duct (29), which leaves, between the peripheral surface of the separating partition (39) and the wall face of the distribution duct (29), a passage slit (43) for the two casting masses.

3. Device according to Claim 2, characterized in that the separating partition (39) is disposed vertically in the distribution duct (29).

4. Device according to Claim 2 or 3, characterized in that the portion of the periphery of the separating partition (39) forming the passage slit (43) has a toothed configuration.

5. Device according to one of Claims 2 to 4, characterized in that the separating partition (39) is applied in sealing manner against the wall face of the distribution duct (29) along the upper part of its peripheral surface and the passage slit (43) is formed along the lower part of the peripheral surface (42) of the separating partition.

6. Device according to one of Claims 2 to 5, characterized in that the separating partition (39) is mounted fixed in the distribution duct (29).

7. Device according to one of Claims 2 to 5, characterized in that the separating partition (39) is mounted slidably in the distribution duct (29) in the axial direction of that duct.

8. Device according to Claim 7, characterized in that the separating partition (39) is mounted by means of a positioning rod (51) which can be given periodic sliding movements by a drive device (57).

9. Device according to Claim 1, characterized in that, within the mixing section (S) in the distribution duct (29), there is installed a hollow conical body (46), the base portion (47) of which is applied against the wall of the distribution duct (29) and in the wall of which there are provided passage openings (49), the sizes of which decrease towards the apex of the conical hollow body.

10. Device according to Claim 9, characterized in that the base portion (47) of the hollow conical body (46) faces towards the feed duct (37) in the end zone of the scraper casting head.

11. Application of the device according to one of Claims 1 to 10 to the production of a film of polyurethane having a coloured band and having energy-absorber properties.

12. Application of the device according to one of Claims 1 to 11 to the production of a polyurethane film having a coloured band and having properties of scratch resistance and abrasion resistance.
